Europäisches Patentamt

European Patent Office

Office européen des brevets

(11) Veröffentlichungsnummer: **0 198 276**
**B1**

(12) EUROPÄISCHE PATENTSCHRIFT

(45) Veröffentlichungstag der Patentschrift:
07.06.89

(21) Anmeldenummer: 86104000.4

(22) Anmeldetag: 24.03.86

(51) Int. Cl.⁴: **G01N 23/04**, G01V 5/00,
H05G 1/26

(54) Röntgenscanner.

(30) Priorität: 03.04.85 DE 3512228

(43) Veröffentlichungstag der Anmeldung:
22.10.86 Patentblatt 86/43

(45) Bekanntmachung des Hinweises auf die Patenterteilung:
07.06.89 Patentblatt 89/23

(84) Benannte Vertragsstaaten:
DE FR GB NL

(56) Entgegenhaltungen:
EP-A- 0 011 338
US-A- 4 366 382
US-A- 4 383 327

PATENTS ABSTRACTS OF JAPAN, Band 7,
Nr. 134 (P-203)[1279], 11. Juni 1983; & JP - A - 58 50 453
ELECTRO CONFERENCE RECORD, Band 4, 24. - 26.
April 1979, Seiten 18/3 : 1-13, New York, US; W.T.
BISIGNANI et al.: "Automated X-ray bomb detection
techniques"

(73) Patentinhaber: Heimann GmbH, Weher Köppel 6,
D-6200 Wiesbaden 1(DE)

(72) Erfinder: Dönges, Gerhard, Am Markt 1,
D-6209 Heidenrod-Kemel(DE)
Erfinder: Herwig, Thomas, Wiesenstrasse 8,
D-6228 Eltville 4(DE)
Erfinder: Koch, Cornelius, Leberberg Nr. 20,
D-6200 Wiesbaden(DE)
Erfinder: Geus, Georg, Bert-Brecht-Strasse 16,
D-6200 Wiesbaden(DE)

(74) Vertreter: Mehl, Ernst, Dipl.-Ing. et al, Postfach 22 13 17,
D-8000 München 22(DE)

## Beschreibung

Die Erfindung betrifft einen Röntgenscanner mit einem Röntgenstrahler für ein fächerförmiges Röntgenstrahlenbündel auf einer und einer Zeile von Detektoren auf der anderen Seite einer Transportvorrichtung für zu untersuchendes Gut sowie mit einer Elektronik zur Erfassung und Verarbeitung der Detektorsignale und einem nachgeschalteten Sichtgerät, bei dem die Elektronik einen Bildspeicher aufweist, der für jeden Detektor je eine Speicherzeile aufweist und eine Abtasteinrichtung für die Detektoren enthält, die die Detektorsignale dem Bildspeicher zuführt.

Ein Röntgenscanner dieser Art dient beispielsweise zur Gepäckuntersuchung (US-A 4 366 382). Das Prüfgut wird auf der Transportvorrichtung mit einer bestimmten Geschwindigkeit an der in einer Ebene senkrecht zur Transportrichtung des Prüfgutes angeordneten Detektorzeil (Sensor) vorbeibewegt.

Das Prüfgut wird aufgrund der Zeilenstruktur des Sensors streifenweise abgetastet. Die Abtastwerte, deren Zahl von der Anzahl der Detektoren abhängt, werden unter der Digitalisierung entweder in Echtzeit ausgewertet oder zum Aufbau eines Videobildes in einen Speicher geschrieben.

Der Abbildungsmaßstab M auf dem Sichtgerät, in Laufrichtung gesehen, ist eine Funktion der Abtastrate A und der Laufgeschwindigkeit V des Prüfgutes.

$$M = A/V \times K$$

K ist eine Systemkonstante, die z. B. Bildformat und Pixelgröße berücksichtigt.

In der Praxis wird oft die Forderung nach variabler Geschwindigkeit der Transportvorrichtung gestellt, um eine optimale Anpassung an die Prüfung oder den Produktionsablauf zu ermöglichen. Bisher konnte man das nur, wenn man Maßstabsänderungen in Laufrichtung gesehen in Kauf nahm.

Der Erfindung liegt die Aufgabe zugrunde, einen Röntgenscanner der eingangs genannten Art so auszubilden, daß der Abbildungsmaßstab unabhängig von der jeweiligen Transportgeschwindigkeit konstant gehalten wird.

Diese Aufgabe ist erfindungsgemäß dadurch gelöst, daß ein Geber für ein von der Geschwindigkeit der Transportvorrichtung abhängiges Signal vorhanden ist, der an der Abtasteinrichtung zur Steuerung der Abtastrate angeschlossen ist, derart, daß der Quotient aus Abtastrate und Transportgeschwindigkeit etwa konstant bleibt. Bei dem erfindungsgemäßen Röntgenscanner wird die Abtastrate für die Detektorzeile so gesteuert, daß der Abbildungsmaßstab konstant bleibt.

Eine Weiterbildung der Erfindung besteht darin, daß die Elektronik einen programmierbaren Verstärker enthält, der in Abhängigkeit von der Abtastrate für die Detektorzeile derart steuerbar ist, daß das Ausgangssignal unabhängig von der Abtastrate konstant bleibt. Dadurch wird der Tatsache Rechnung getragen, daß die Detektoren üblicherweise die auftreffende Strahlung in einem Zeitintervall integrieren, das dem Reziprokwert der Abtastrate proportional ist. Mit zunehmender Abtastrate wird

demgemäß die Verstärkung erhöht, so daß die Signalamplitude konstant gehalten werden kann. In weiterer Ausgestaltung der Erfindung kann der die Röntgenstrahlen speisende Röntgengenerator derart gesteuert sein, daß die Röntgenröhre abgeschaltet wird, wenn die Transportvorrichtung stillsteht. Dadurch wird eine zu hohe Dosis am Prüfgut bei stillstehender Transportvorrichtung vermieden.

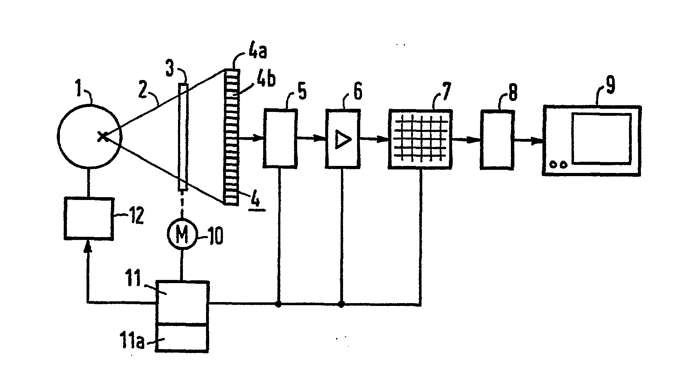

Die Erfindung ist nachfolgend anhand eines in der Zeichnung dargestellten Ausführungsbeispieles näher erläutert.

In der Zeichnung ist ein Röntgenstrahler 1 dargestellt, der ein fächerförmiges Röntgenstrahlenbündel 2 aussendet, dessen Fächerebene in der Zeichenebene liegt und Prüfgut auf einer Transportvorrichtung 3 durchstrahlt, bei der die Transportrichtung senkrecht zur Zeichenebene verläuft. Die aus dem Prüfgut austretende Röntgenstrahlung wird von einer Zeile 4 aus Detektoren 4a, 4b usw. erfaßt. Jeder Detektor 4a, 4b usw. kann aus einem Szintillationskristall und einer damit optisch gekoppelten Fotodiode bestehen. Die Detektorsignale werden durch eine Abtasteinrichtung 5 aufeinander folgend abgetastet und über einen steuerbaren Verstärker 6 in einen Bildspeicher 7 eingelesen. Das Einlesen erfolgt in der Weise, daß jedem Detektor 4a, 4b usw. je eine Zeile im Bildspeicher zugeordnet ist. Das nach dem Zurücklegen eines vorbestimmten Weges im Bildspeicher 7 abgespeicherte Bild wird über eine Übertragungselektronik 8 auf einem Sichtgerät 9 wiedergegeben.

Die Transportvorrichtung 3 wird durch einen Elektromotor 10 angetrieben, dem ein Geber 11 für ein von der Geschwindigkeit der Transportvorrichtung 3 abhängiges Signal zugeordnet ist. Der Geber 11 ist an der Abtasteinrichtung 5 angeschlossen und steuert die Abtastrate derart, daß der Quotient aus Abtastrate und Transportgeschwindigkeit und damit der Abbildungsmaßstab auf dem Sichtgerät 9 konstant bleibt. Der Geber 11 kann dabei ein Inkrementalgeber sein. Der Takt bzw. die Adreßerzeugung zur Zeilenabtastung wird in diesem Fall aus einer Teilerkette gewonnen, die aus programmierbaren Zählern besteht. Ein geringer Fehler entsteht in diesem Fall nur durch das stets ganzzahlige Teilerverhältnis der Zählerkette. Es werden sowohl gewollte als auch ungewollte Änderungen der Geschwindigkeit der Transportvorrichtung 3 durch eine gegenläufige Änderung der Abtastrate ausgeglichen.

Übliche Detektoren integrieren die auftreffende Strahlung in einem Zeitintervall, das dem Reziprokwert der Abtastrate proportional ist. Das Ausgangssignal solcher Detektoren ist daher umgekehrt proportional der Abtastrate. Die Abhängigkeit der Signalamplitude von der Abtastrate wird mittels des programmierbaren Verstärkers 6 konstant gehalten.

Bei Röntgenscannern tritt beim Stillstand der Transportvorrichtung 3 am Prüfgut örtlich begrenzt eine Dauerstrahlung auf, die eine hohe Dosis zur Folge hat. Zur Vermeidung einer zu hohen Dosis wird der Bandstillstand durch Auswertung des Ausgangssignales des Gebers 11 detektiert und der Röntgenstrahler 1 über den Röntgengenerator 12 abgeschaltet.

Das Anhalten der Transportvorrichtung 3 erfolgt stets mit einem gewissen Nachlauf. Der Umfang der beschriebenen Steuerung der Abtastrate ist begrenzt. Ferner muß der Röntgenstrahler 1 bereits kurz vor dem vollständigen Stillstand abgeschaltet werden, so daß ohne besondere Maßnahmen Information verlorengeht und eine nahtlose Bildfortsetzung nicht möglich ist.

Zur Vermeidung dieser Nachteile wird beim Abschalten der Transportvorrichtung 3 das Schreiben des Bildspeichers 7 unterbrochen und die Anzahl der Impulse des Gebers 11 bis zum Stillstand gezählt. Vor Wiederanlauf der Transportvorrichtung 3 wird diese bis über die Stopmarke zurückgefahren. Dabei werden die Inkrementalgeberimpulse vom Zählerstand subtrahiert; der Zähler 11a zählt rückwärts. Beim Wiederanlauf der Transportvorrichtung 3 ist der Zählerstand zunächst negativ. Der Schreibvorgang für den Bildspeicher 7 wird erst beim Zählerstand Null fortgesetzt, so daß ein nahtloser Bildfortsatz erreicht ist.

## Patentansprüche

1. Röntgenscanner mit einem Röntgenstrahler (1) für ein fächerförmiges Röntgenstrahlenbündel (2) auf einer Seite und einer Zeile (4) von Einzeldetektoren (4a, 4b) auf der anderen Seite einer Transportvorrichtung (3) für zu untersuchendes Gut sowie mit einer Elektronik (5 bis 8) zur Erfassung und Verarbeitung der Detektorsignale und einem nachgeschalteten Sichtgerät (9), bei dem die Elektronik (5 bis 8) einen Bildspeicher (7) aufweist, der für jeden Detektor (4a, 4b) je eine Speicherzeile aufweist, und eine Abtasteinrichtung (5) für die Detektoren (4a, 4b) enthält, die die Detektorsignale dem Bildspeicher (7) zuführt, **dadurch gekennzeichnet,** daß ein Geber (11) für ein von der Geschwindigkeit der Transportvorrichtung (3) abhängiges Signal vorhanden ist, der an der Abtasteinrichtung (5) zur Steuerung der Abtastrate angeschlossen ist, derart, daß der Quotient aus Abtastrate und Transportgeschwindigkeit etwa konstant bleibt.

2. Röntgenscanner nach Anspruch 1, **dadurch gekennzeichnet,** daß die Elektronik (5 bis 8) einen programmierbaren Verstärker (6) enthält, der in Abhängigkeit von der Abtastrate für die Scannerzeile (4) derart steuerbar ist, daß das Ausgangssignal unabhängig von der Abtastrate konstant bleibt.

3. Röntgenscanner nach Anspruch 1 oder 2, **dadurch gekennzeichnet,** daß der den Röntgenstrahler (1) speisende Röntgengenerator (12) derart gesteuert ist, daß der Röntgenstrahler (1) abgeschaltet wird, wenn die Transportvorrichtung (3) stillsteht.

4. Röntgenscanner nach einem der Ansprüche 1 bis 3, **dadurch gekennzeichnet,** daß Mittel (11) zum Unterbrechen des Schreibens in den Bildspeicher (7) beim Abschalten der Transportvorrichtung (3) vorhanden sind und daß der Geber (11) einen Zähler (11a) aufweist, der Inkrementalgeberimpulse bis zum Stillstand der Transportvorrichtung (3) zählt, so daß die Transportvorrichtung (3) vor Wiederanlauf bis über die Stopmarke zurückfahrbar ist, wobei die Inkrementalgeberimpulse vom Zählerstand subtrahiert werden und der Schreibvorgang erst beim Zählerstand Null fortgesetzt wird.

## Claims

1. An X-ray scanner having an X-ray tube (1) for radiating an fan-shaped beam of X-ray (2) on one side and a row (4) of individual detectors (4a, 4b) on the other side of a transport device (3) for goods to be examined, and having an electronic system (5 to 8) to acquire and process the detector signals and a visual display unit (9) connected thereafter, in which the electronic system ( 5 to 8) has an image store (7) which has a storage row for each detector (4a, 4b), and includes a scanning device (5) for the detectors (4a, 4b) which conveys the detector signals to the image store (7), characterised in that there is a transmitter (11) for a signal depending on the speed of the transport device (3) and which is connected to the scanning device (5) to control the scanning rate in such a way that the quotient of the scanning rate and the transporting speed remains substantially constant.

2. An X-ray scanner according to claim 1, characterised in that the electronic system (5 to 8) includes a programmable amplifier (6) which can be controlled depending on the scanning rate for the scanning row (4) in such a way that the output signal remains constant independent of the scanning rate.

3. An X-ray scanner according to claim 1 or claim 2, characterised in that the X-ray generator (12) feeding the X-ray tube (1) is controlled in such a way that the X-ray tube (1) is switched off when the transport device (3) is stationary.

4. An X-ray scanner according to any one of claims 1 to 3, characterised in that there are means (11) to interrupt the writing into the image store (7) when the transport device (3) is switched off and that the transmitter (11) has a counter (11a) which counts the incremental pulses from the transmitter until the transport device (3) is stationary so that the transport device (3) can be returned beyond the stop mark before restarting the incremental pulses from the transmitter being subtracted from the counter reading and the writing-in process only being continued when the counter reading is zero.

## Revendications

1. Scanner X comportant une gaine équipée (1) pour un faisceau (2) de rayons X en forme d'éventail d'un côté d'un dispositif de transport (3) pour l'objet à examiner et une rangée (4) de détecteurs individuels (4a, 4b) de l'autre côté du dispositif de transport, ainsi qu'un système électronique (5 à 8) servant à détecter et à traiter les signaux des détecteurs et un moniteur (9) branché en aval, et dans lequel le système électronique (5 à 8) possède une mémoire d'images (7), comporte une ligne respective de mémoire pour chaque détecteur (4a, 4b), et contient un dispositif d'exploration (5) pour les détecteurs (4a, 4b), qui envoient les signaux des détecteurs à la mémoire d'images (7), caractérisé par le fait qu'il est prévu un transmetteur (11) qui sert à délivrer un signal dépendant de la vitesse du dispositif de transport (3) et est raccordé au dispositif de transport (3) et est raccordé au dispositif d'exploration (5) de manière à réaliser la commande de la vitesse d'exploration, de telle sorte que le quotient entre la fréquence d'exploration et la vitesse de transport reste approximativement constant.

2. Scanner X suivant la revendication 1, caractérisé par le fait que le système électronique (5a) comporte un amplificateur programmable (6), qui peut être commandé en fonction de la fréquence d'exploration pour la rangée (4) de détecteurs du scanner de telle sorte que le signal de sortie reste constant indépendamment de la fréquence d'exploration.

3. Scanner X suivant la revendication 1 ou 2, caractérisé par le fait que le générateur radiologique (12) alimentant le tube radiogène (1) est commandé de telle sorte que le tube radiogène (1) est débranchée lorsque le dispositif de transport (3) est à l'arrêt.

4. Scanner X suivant l'une des revendications 1 à 3, caractérisé par le fait qu'il est prévu des moyens (11) pour interrompre l'enregistrement dans la mémoire d'images (7) lors du débranchement du dispositif de transport (3), et que le transmetteur (11) contient un compteur (11a), qui compte les impulsions du transmetteur incrémental jusqu'à l'arrêt du dispositif de transport (3) de sorte que ce dernier peut être rétrogradé jusque dans une position située au-delà de la marque d'arrêt, avant le redémarrage, auquel cas les impulsions du transmetteur incrémental sont soustraites de l'état de comptage et l'opération d'enregistrement se poursuit uniquement lorsque l'état de comptage est nul.